**Europäisches Patentamt**

(19) **European Patent Office**

**Office européen des brevets**

(11) Veröffentlichungsnummer: **0 112 456**
**B1**

(12) **EUROPÄISCHE PATENTSCHRIFT**

(45) Veröffentlichungstag der Patentschrift:
07.01.87

(51) Int. Cl.⁴: **F 16 B 13/00**

(21) Anmeldenummer: **83110562.2**

(22) Anmeldetag: **22.10.83**

(54) **Spreizdübel zur Abstandsbefestigung von Gegenständen.**

(30) Priorität: **24.12.82 DE 3248102**

(43) Veröffentlichungstag der Anmeldung:
**04.07.84 Patentblatt 84/27**

(45) Bekanntmachung des Hinweises auf die Patenterteilung:
**07.01.87 Patentblatt 87/2**

(84) Benannte Vertragsstaaten:
**AT BE CH FR GB IT LI NL**

(56) Entgegenhaltungen:
EP - A - 0 050 729
AT - B - 234 981
AT - B - 366 480
CH - A - 488 069
DE - A - 2 938 328
DE - B - 1 291 458

(73) Patentinhaber: **fischer-werke Artur Fischer GmbH & Co.
KG, Weinhalde 14-18,
D-7244 Tumlingen/Waldachtal 3 (DE)**

(72) Erfinder: **Fischer, Artur, Dr. h.c., Weinhalde 34,
D-7244 Tumlingen/Waldachtal 3 (DE)**

## Beschreibung

Die Erfindung betrifft einen Spreizdübel zur Abstandsbefestigung von Gegenständen, dessen aufspreizbarer Abschnitt in ein Bohrloch einer Wand einführbar und zu seiner Befestigung darin durch Einziehen eines Spreizkonusses mittels einer Schraube aufspreizbar ist, und der einen weiteren Abschnitt aufweist, der mit seinem Ende in den zu befestigenden Gegenstand eingreift und Anschlagmittel aufweist, die diesen Gegenstand in einem Abstand zur Wand halten (CH-A 488069).

Spreizdübel der oben genannten Art können sowohl mit einer Kunststoff- als auch mit einer Metallhülse ausgestattet sein. Die Abstandsbefestigung erfolgt in der Regel durch starr oder federnd am Dübelumfang angebrachte Vorsprünge, deren Stirnseite zur Auflage des im Abstand zu befestigenden Gegenstandes dient. Diese Art der Abstandshalterung ermöglicht zwar die Durchsteckmontage, hat aber den Nachteil, dass nur eine geringe Auflagefläche für den zu befestigenden Gegenstand vorliegt, die nur kleine Auflagedrücke zulässt. Darüber hinaus müssen die Abstände der Vorsprünge zur Stirnseite des Dübels etwa der Dicke des zu befestigenden Gegenstandes entsprechen, so dass für verschiedene Dicken unterschiedliche Dübelformen erforderlich sind.

Aus der DE-C 1291458 ist eine weitere Form eines Spreizdübels zur Abstandsbefestigung von Gegenständen bekannt, die am weiteren Abschnitt ein Aussengewinde aufweist. Mit einem solchen Dübel können entsprechend der Gewindelänge in kleinerem Rahmen unterschiedliche Klemmstärken verspannt werden. Allerdings ist bei diesem Dübel wegen des auftragenden Gewindes im zu befestigenden Gegenstand ein grösseres Bohrloch als im Mauerwerk notwendig. Durch die zur Abstandshalterung auf das Gewinde aufgedrehte Mutter ist ferner auch keine Durchsteckmontage möglich.

Der Erfindung liegt die Aufgabe zugrunde, einen Spreizdübel zur Abstandsbefestigung von Gegenständen zu schaffen, der in Durchsteckmontage montierbar und auf verschiedene Klemmstärken einstellbar ist und der eine grossflächige Abstützung des zu befestigenden Gegenstandes erlaubt.

Erfindungsgemäss wird dies dadurch erreicht, dass der weitere Abschnitt an seinem Umfang paarweise auf gleicher Höhe und in regelmässigen Abständen nacheinander angeordnete Einschnitte aufweist, in die eine mit einem Schlitz versehene, den zu befestigenden Gegenstand im Abstand haltende Auflageplatte einschiebbar ist.

Zur Montage des erfindungsgemässen Spreizdübels wird durch den zu befestigenden Gegenstand hindurch in die Wand ein Bohrloch gebohrt, dessen Durchmesser dem Aussendurchmesser des Spreizdübels entspricht. Nach dem Einführen des Spreizdübels wird der zu befestigende Gegenstand im gewünschten Abstand durch Einschieben der Auflageplatte in das mit der Rückseite des Gegenstandes bündige Einschnittpaar abgestützt. Durch Einziehen des Spreizkonusses mittels der Befestigungsschraube wird der Spreizdübel im Bohrloch verankert und gleichzeitig der zu befestigende Gegenstand gegen die Auflageplatte verspannt. Beim Setzen der restlichen Spreizdübel werden diese im Bohrloch so verschoben, dass die Oberkante des für die Abstützung vorgesehenen Einschnittpaares mit der Rückseite des zu befestigenden Gegenstandes bündig ist. Die eingeschobene Auflageplatte stützt nach der Befestigung den Gegenstand im eingestellten Abstand ab. Die grossflächige, über die Auflageplatte in die Wandung des Spreizdübels eingeleitete Auflage ermöglicht die Aufnahme sehr hoher Druckkräfte. Die Einstellungsmöglichkeit auf unterschiedliche Klemmstärken ergibt sich durch die Anordnung von mehreren Einschnittpaaren nacheinander.

In einer weiteren Ausgestaltung der Erfindung kann die Einschnittiefe der Wandungsstärke des weiteren Abschnittes entsprechen und die Weite des Schlitzes der Auflageplatte dem zwischen einem Einschnittpaar verbleibenden Querschnittssteg entsprechen. Durch diese Massnahme ergibt sich eine ausreichende Auflage für die Auflageplatte, ohne den Schaft des Dübels wesentlich zu schwächen.

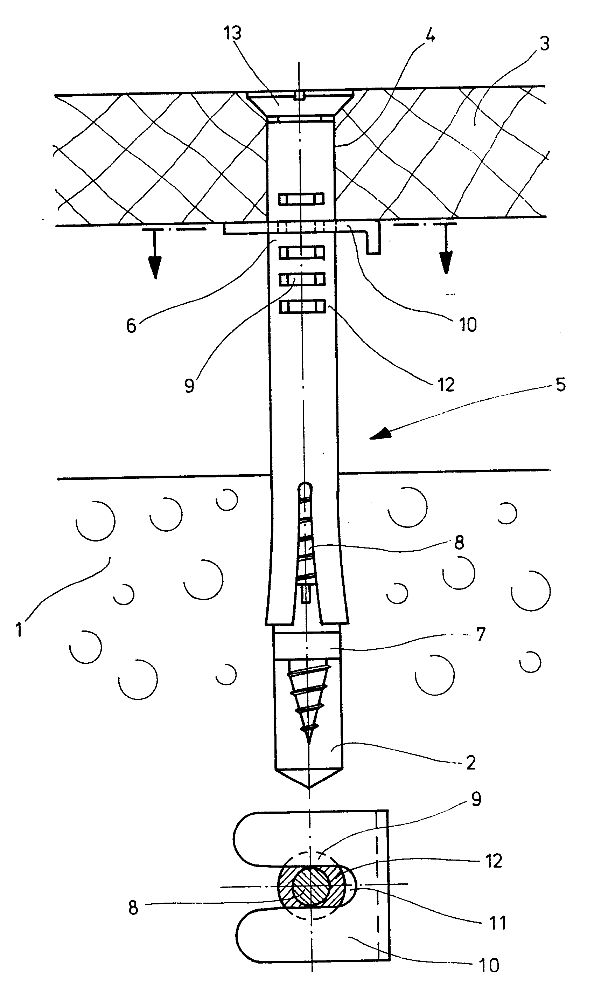

In der Zeichnung ist ein Ausführungsbeispiel der Erfindung dargestellt.

In der Wand 1 ist ein Bohrloch 2 angeordnet. Der im Abstand zu befestigende Gegenstand 3 weist eine Bohrung 4 auf, die mit dem Bohrloch 2 der Wand 1 fluchtet. In das Bohrloch 2 der Wand 1 ist der Spreizdübel 5 eingeführt, dessen Schaft 6 vorzugsweise aus einer Metallhülse besteht, die durch Einziehen eines Spreizkonusses 7 mittels einer Schraube 8 aufspreizbar ist. Über die Wand 1 ragt ein weiterer Abschnitt hinaus, der in den zu befestigenden Gegenstand 3 eingreift. Dieser weitere Abschnitt weist paarweise und in regelmässigen Abständen nacheinander angeordnete Einschnitte 9 auf, deren Tiefe etwa der Wandungsstärke des Abschnittes entspricht. Zur Abstützung des im Abstand zu befestigenden Gegenstandes 3 ist in ein Einschnittpaar eine Auflageplatte 10 mit Schlitz 11 eingeschoben, wobei die Schlitzweite dem zwischen dem Einschnittpaar verbleibenden Querschnittssteg 12 entspricht. Für die Abstützung wird das Einschnittpaar ausgewählt, das nach dem Einführen des Dübels in das Bohrloch mit der Rückseite des zu befestigenden Gegenstandes etwa bündig ist. Durch Anziehen der Schraube 8 wird mit dem Schraubenkopf 13 als Gegenlager sowohl die Verspannung des zu befestigenden Gegenstandes 3 gegen die Auflageplatte 10 als auch die Aufspreizung des Dübels 5 erreicht.

## Patentansprüche

1. Spreizdübel (5) zur Abstandsbefesigung von Gegenständen (3), dessen aufspreizbarer Abschnitt in ein Bohrloch (2) einer Wand (1) einführbar und zu seiner Befestigung darin durch Einziehen eines Spreizkonusses (7) mittels einer Schraube (8) aufspreizbar ist und der einen weiteren Abschnitt aufweist, der mit seinem Ende in den zu befestigenden Gegenstand eingreift und Anschlagmittel (10) aufweist, die diesen Gegenstand in einem Abstand zur Wand halten, dadurch gekennzeichnet, dass der weitere Abschnitt an seinem Umfang paarweise auf gleicher Höhe und in regelmässigen Abständen nacheinander angeordnete Einschnitte (9) aufweist, in die eine mit einem Schlitz (11) versehene, den zu befestigenden Gegenstand im Abstand haltende Auflageplatte (10) einschiebbar ist.

2. Spreizdübel nach Anspruch 1, dadurch gekennzeichnet, dass die Tiefe der Einschnitte (9) der Wandungsstärke des weiteren Abschnittes entspricht, und dass die Weite des Schlitzes (11) der Auflageplatte (10) dem zwischen einem Einschnittpaar verbleibenden Querschnittssteg (12) entspricht.

**Claims**

1. Expansible plug (5) for the spaced fastening of articles (3), of which the expansible portion can be inserted into a hole (2) drilled in a wall (1) and, for the purpose of being fastened therein, can be expanded by retracting an expander cone (7) by means of a screw (8), and which has a further portion the end of which engages in the article to be fastened and which has stop means (10) to hold this article at a distance from the wall, characterised in that the further portion has on its circumference openings (9) arranged in pairs at the same height and one after the other at regular spacing, into which openings there can be inserted a support plate (10), provided with a slot (11), which holds the article to be fastened at a distance from the wall.

2. Expansible plug according to claim 1, characterised in that the depth of the openings (9) corresponds to the wall thickness of the further portion, and that the width of the slot (11) in the support plate (10) corresponds to the cross-sectional portion (12) remaining between the openings of a pair of openings.

**Revendications**

1. Cheville expansible (5) pour fixation espacée d'éléments (3), dont le tronçon expansible peut être introduit dans un trou (2) percé dans un mur (1) et peut se dilater, pour s'y fixer, par le serrage, à l'aide d'une vis (8), d'un cône (7) d'expansion, et qui présente un autre tronçon pénétrant par son extrémité dans l'élément à fixer et présentant des organes (10) d'appui maintenant cet élément à distance du mur, cheville caractérisée en ce que le second tronçon présente à sa périphérie des évidements (9) disposés par paires à la même hauteur et à des distances successives régulières et dans lesquels on peut insérer une plaque (10) d'appui présentant une encoche (11) et maintenant à distance l'élément à fixer.

2. Cheville expansible selon la revendication 1, caractérisée en ce que la profondeur des évidements (9) correspond à l'épaisseur de paroi du second tronçon et en ce que la largeur de l'encoche (11) de la plaque (10) d'appui correspond à la section de l'âme (12) demeurant entre une paire d'évidements.